# EUROPÄISCHE PATENTANMELDUNG

(11) **EP 0 952 681 A2**
(43) Veröffentlichungstag der Anmeldung: **27.10.1999**
(21) Anmeldenummer: 99810245.3
(22) Anmeldetag: 19.03.1999
(51) Int. Cl.: H04B 3/56

(54) **Kapazitives Koppelkabel zum Signalkoppeln auf Netzleitungen**

(30) Priorität: 20.04.1998 DE 19817575
(71) Anmelder: ABB RESEARCH LTD., 8050 Zürich (CH)
(72) Erfinder: Lehmann, Josef, 79761 Waldshut (DE); Sabbattini, Bruno, 5430 Wettingen (CH)
(74) Vertreter: Clerc, Natalia

(57) **Zusammenfassung**

Die vorliegende Erfindung betrifft das Gebiet der Signalübertragung über Stromleitungen (PLC = "power line communication"). Zur vereinfachten Signaleinkopplung von Schaltstationen 1, 1' in Freiluftleitungen 2a oder Stromkabel 2b auf Hoch- oder Mittelspannungsebene wird vorgeschlagen, ein modifiziertes spannungsisoliertes Koppelkabel 12 als Koppelkondensator KK zu verwenden. Die Einkopplung erfolgt von den Abschirmungen 11; 11a, 11b, 11c; 111, 112; 13 auf die Phasenleiter 10; 10a, 10b, 10c; 101, 102 des Koppelkabels 12 und von dort in die Phasen der Stromleitung 2a, 2b, 5. Es werden auch Konfigurationen zur Überbrückung von Schaltern in Unterstationen 1' ohne Kommunikationsbedarf angegeben.

## Beschreibung

### TECHNISCHES GEBIET

Die vorliegende Erfindung betrifft das Gebiet der Kommunikation über Strom-versorgungsnetze. Sie geht aus von einer Vorrichtung zur Signalübertragung über Stromleitungen nach dem Oberbegriff des Anspruchs 1.

### STAND DER TECHNIK

Die Erfindung hat eine vereinfachte Vorrichtung zur Signaleinkopplung in Freiluftleitungen oder Stromkabel auf Hoch- oder Mittelspannungsebene zum Gegenstand. Die Verwendung bestehender Energieverteilungsnetze zur Datenkommunikation ist von grosser wirtschaftlicher Bedeutung. Elektrizitätsversorgungsunternehmen möchten ohne Neuinstallation von Leitungen beispielsweise Einrichtungen des Stromverteilungsnetzes abfragen und fernbedienen oder durch Fernabfragen und -steuerungen bei Endverbrauchern die Auslastung des Netzes optimieren. Auch können bestehende Leitungen als Nachrichtenkanäle verwendet oder Dritten angeboten werden.

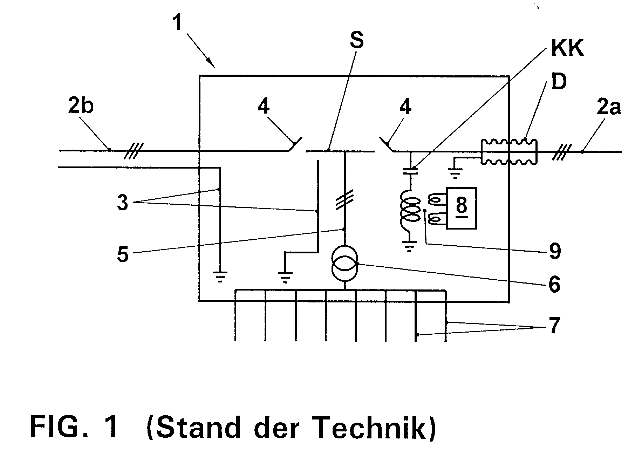

Die Erfindung nimmt auf einen Stand der Technik Bezug, wie er in Fig. 1 skizziert ist. In einer Energieverteilungsanlage 1, z. B. einer Schaltstation, Transformatorenstation o. ä., wird über eine Freiluft- oder Überlandleitung 2a und/ oder über ein Stromkabel 2b mit Abschirmung 3 elektrische Energie zugeführt und bedarfsweise über Schalter 4, eine Sammelschiene S oder Zuleitung 5 und einen Transformator 6 an Verbraucher 7 weitergeleitet. Im Falle eines Ortstransformators 1 handelt es sich typischerweise um eine Mittelspannungs - Überlandleitung 2a, ein Mittelspannungskabel 2b, eine Sammelschiene S oder Zuleitung 5 und einen Mittelspannungs/Niederspannungs - Transformator mit jeweils drei Phasen sowie beim Verbraucher um eine Niederspannungsverteilung 7. Es ist nun bestens bekannt, Signale einer Kommunikationselektronik 8 über einen Signaltransformator 9 einem Koppelkondensator KK zuzuführen und über den Koppelkondensator KK kapazitiv einem Phasenleiter der Überlandleitung 2a oder des Stromkabels 2b aufzumodulieren. Problematisch sind hierbei der grosse Isolationsaufwand und der Platzbedarf eines Hoch- oder Mittelspannungs - Koppelkondensators KK und die dadurch bedingten Kosten.

In der deutschen Patentschrift DE 196 48 382 C1 werden ein Verfahren und eine Vorrichtung zur Signalübertragung über Stromversorgungsleitungen offengelegt, bei welchem Kommunikationssignale über die Phasenleiterschirme oder gegebenenfalls die Kabelabschirmung von Stromkabeln übertragen werden. Die Signale werden über induktive Koppler auf die Abschirmungen aufmoduliert. Entlang der Übertragungsstrecke sind die Abschirmungen über induktive Impedanzen oder Drosseln geerdet, so dass die hochfrequenten Signale verlustarm weitergeleitet werden. Zur Überbrückung geöffneter Schalter sind durchgehende Abschirmungen oder galvanisch getrennte, über induktive Ein- und Auskoppler verbundene Abschirmungen vorgesehen. Offensichtlich ist dieses Verfahren nur bei Stromkabeln mit Abschirmungen anwendbar und für ungeschirmte Überlandleitungen ungeeignet. Gegebenenfalls besteht auch die Möglichkeit einer kapazitiven Kopplung über einen geöffneten Schalter. Hierbei werden kapazitive Kopplungen zwischen dem Kabelschirm und einem Phasenleiter entlang der Übertragungsstrecke und zwischen den Phasenkontakten des offenen Schalters ausgenutzt. Wesentliche Nachteile bestehen darin, dass die Schalterkapazitäten klein und oftmals ungenügend sind und dass ein konventioneller Koppelkondensator zwischen Phasenleiter und Empfangsstation vorgesehen ist. Gänzlich unbefriedigend ist es, wenn zur Überbrückung von Schaltern in einer Überlandleitung Paare von konventionellen Koppelkondensatoren benötigt werden.

### DARSTELLUNG DER ERFINDUNG

Aufgabe der vorliegenden Erfindung ist es, eine Vorrichtung zur Signalübertragung über Stromleitungen eines Mittel- oder Hochspannungsnetzes anzugeben, welche sich durch einen kostengünstigen, platzsparenden und effizienten kapazitiven Signalkoppler auszeichnet. Diese Aufgabe wird erfindungsgemäss durch die Merkmale des Anspruchs 1 gelöst.

Kern der Erfindung ist es nämlich, zur Einkopplung von Signalen einer Kommunikationelektronik in eine Phase einer Stromleitung ein spannungsfestes Koppelkabel vorzusehen, dessen Phasenleiter mit der Phase der Stromleitung und dessen Abschirmung mit einem Signalkoppler der Kommunikationselektronik in elektrischer Verbindung steht.

Wichtige Ausführungsbeispiele betreffen bevorzugte Anordnungen des Koppelkabels in Energieverteilungsanlagen zwischen einer hereinkommenden Stromleitung und einem Lasttrenner oder in der Zuleitung zwischen einem Lasttrenner und einem Verteiltransformator, ferner die Kombination zweier Koppelkabel zur Signalüberbrückung von Lasttrennern.

Weitere Ausführungsbeispiele beziehen sich auf bevorzugte Typen von Koppelkabeln (ein- oder mehrphasiges Mittelspannungskabel, ein- oder mehrphasiges Hochspannungskabel) und Beschaltungen der Abschirmung (gleichtakt oder gegentakt angeschlossene Phasenleiterschirme).

Zusätzliche Ausführungsbeispiele ergeben sich aus den abhängigen Ansprüchen und durch Kombinationen erfindungswesentlicher Merkmale.

Ein wichtiger Vorteil der Signalübertragungseinrichtung besteht darin, dass voluminöse, hochspannungsisolierte Koppelkondensatoren durch geringfügig modifizierte Stromkabel ersetzt werden können.

Ein weiterer Vorteil ist es, dass mit erfindungsgemässen Koppelkabeln eine Signaleinkopplung in ungeschirmte Überlandleitungen und eine nachrichtentechnische Überbrückung von Lasttrennern auf einfache Weise realisierbar sind.

### KURZE BESCHREIBUNG DER ZEICHNUNG

Die Erfindung wird nachstehend anhand von Ausführungsbeispielen erläutert. Es zeigen schematisch:
- Fig. 1: eine Transformatorenstation mit einem konventionellen Koppelkondensator zur kapazitiven Signaleinkopplung in die Phase einer Stromleitung (Stand der Technik);
- Fig. 2, 4: Transformatorenstationen mit einem erfindungsgemässen Koppelkabel als Koppelkondensator;
- Fig. 3: ein Koppelkabel in Form eines dreiphasigen Mittelspannungskabels;
- Fig. 5: eine Transformatorenstation mit zwei erfindungsgemässen Koppelkabeln zur Überbrückung eines Schalters;
In den Figuren sind gleiche Teile mit gleichen Bezugszeichen versehen.

### WEGE ZUR AUSFÜHRUNG DER ERFINDUNG

Die Erfindung hat eine Vorrichtung zur Signalübertragung über Stromleitungen 2a, 2b eines Mittel- oder Hochspannungsnetzes zum Gegenstand. Die Vorrichtung umfasst eine Kommunikationselektronik 8 mit mindestens einem Signalkoppler 9 und mindestens einem Koppelkondensator zur Signaleinkopplung in mindestens eine Phase der Stromleitung 2a, 2b, 5. Als Koppelkondensator ist ein Koppelkabel 12 vorgesehen, welches einen Phasenleiter 10; 10a, 10b, 10c; 101, 102 und eine Abschirmung 11; 11a, 11b, 11c; 111, 112; 13 aufweist. Der Phasenleiter 10; 10a, 10b, 10c; 101, 102 des Koppelkabels 12 steht mit der Phase der Stromleitung 2a, 2b, 5 und die Abschirmung 11; 11a, 11b, 11c; 111, 112; 13 des Koppelkabels 12 mit dem Signalkoppler 9 in elektrischer Verbindung. Bevorzugt ist jede Phase der Stromleitung 2a, 2b, 5 mit je einem Phasenleiter 10; 10a, 10b, 10c; 101, 102 des Koppelkabels 12 elektrisch verbunden, besteht die Abschirmung aus einem oder mehreren Phasenleiterschirmen 11; 11a, 11b, 11c; 111, 112 und sind die Phasenleiterschirme 11; 11a, 11b, 11c; 111, 112 miteinander im Gleichtakt oder zueinander im Gegentakt an den Signalkoppler 9 angeschlossen

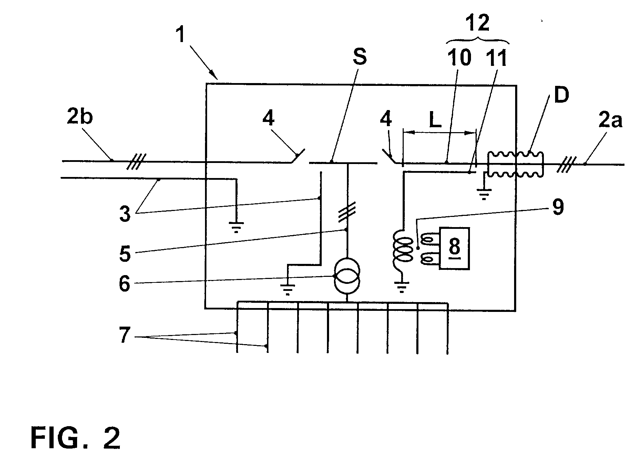

In Fig. 2 ist als erstes Ausführungsbeispiel eine Energieverteilungsanlage 1 dargestellt, bei welcher anstelle eines konventionellen Koppelkondensators KK ein Koppelkabel 12 zwischen einer Durchführung D einer Überlandleitung 2a und einem Schalter 4 angeordnet ist. Hierbei ist ein Phasenleiter 10 des Koppelkabels 12 elektrisch leitend in die Phase der Überlandleitung 2a eingefügt und mindestens eine Abschirmung 11 des Koppelkabels 12 mit dem Signalkoppler 9 elektrisch leitend verbunden. Die erfindungsgemässe Signaleinkopplung in eine Phase der Stromleitung 2a, 2b, 5 ist besonders vorteilhaft im Falle von Überlandleitungen 2a, weil diese i. a. ungeschirmt sind, keinen Erdleiter mitführen oder aber mit Erdleitern versehen sind, die an jedem Masten auf Erde gelegt und daher für die Kommunikation unbrauchbar sind.

Ausser bei Überlandleitungen 2a kann die Erfindung auch bei Stromkabeln 2b mit geerdeten Kabel- oder Phasenabschirmungen 3 angewendet werden. Dabei ist das Koppelkabel 12 zwischen einem Kabelabgang des Stromkabels 2b und dem Schalter 4 angeordnet. Es ist wichtig, dass die Phasenleiterschirme 11 des Koppelkabels 12 von den Abschirmungen 3, insbesondere den Phasenabschirmungen 3, des Stromkabels 2b elektrisch isoliert sind.

Die Wirkungsweise des Koppelkabels 12 als Koppelkondensator beruht darauf, dass zwischen der mindestens einen Abschirmung 11a, 11b, 11c, 13 und dem mindestens einen Phasenleiter 10a, 10b, 10c eine Kapazität besteht, über die Signale kapazitiv in mindestens eine Phase der Überlandleitung 2a eingekoppelt werden können. Die Grösse der Koppelkapazität hängt von der relativen geometrischen Anordnung der Abschirmung(en) 11a, 11b, 11c, 13 zu dem oder den Phasenleiter(n) 10a, 10b, 10c, in welche die Signale eingespeist werden, sowie von der Länge der Koppelstrecke bzw. des Koppelkabels 12 ab. Die Signale können auch zwischen verschiedenen Phasenleitern 10a, 10b, 10c des Koppelkabels 12 oder zwischen verschiedenen Phasen der Überlandleitung 2a überkoppeln.

Typische Kapazitäten zwischen einem Phasenleiter 10a, 10b, 10c und einem Phasenleiterschirm 11a, 11b, 11c betragen bei Hoch- oder Mittelspannungskabeln 12 150 nF/km bis 500 nF/km. Die Kapazität des Koppelkabels soll für eine effiziente Ein- und Auskopplung grösser als 1 nF sein und z. B. im Bereich von 1 nF bis 30 nF, bevorzugt 1 nF bis 10 nF liegen. Günstigerweise wird das Koppelkabel 12 direkt in einer Energieverteilungsanlage 1 verlegt und soll daher möglichst kurz sein. Eine vorteilhafte Wahl der Kabellänge L ist daher L > 2 m, bevorzugt 2 m < L < 20 m, besonders bevorzugt 4 m bis 10 m.

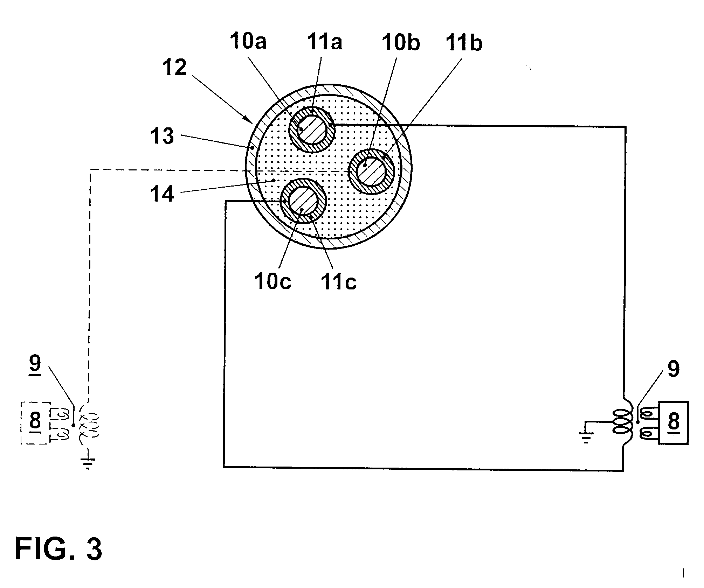

Fig. 3 zeigt ein Ausführungsbeispiel eines Koppelkabels 12 in Form eines Mittelspannungskabels 12 mit drei Phasenleitern 10a, 10b, 10c, die jeweils einen leitenden, isolierten und geerdeten Phasenleiterschirm 11a, 11b, 11c aufweisen, in einem Isolator 14 eingebettet sind und von einem gemeinsamen leitenden, geerdeten, aussenisolierten Kabelschirml3 umgeben sind. Bei dem Koppelkabel 12 kann es sich auch um ein ein- oder mehrphasiges Mittel- oder Hochspannungskabel handeln. Die erfindungsgemässe Modifikation des Kabels 12 besteht darin, dass wenigstens eine der Abschirmungen 11a, 11b, 11c oder 13 über den Signalkoppler 9, vorzugsweise einen einseitig geerdeten induktiven Koppler 9 oder Signaltransformator 9 zum Senden und/oder Empfangen, mit der Kommunikationselektronik 8 elektrisch leitend verbunden ist (gestrichelte Darstellung). Bevorzugt ist der Signaltransformator 9 mit einem Phasenleiterschirm 11a, 11b, 11c, insbesondere mit allen Phasenleiterschirmen 11a, 11b, 11c (Gleichtakt - Signalübertragung) verbunden. Die Signalübertragung über mehrere Phasen ist besonders immun gegen Unterbrechungen einzelner Phasen. Die Signalrückleitung erfolgt über die Erde. Hierbei kann die grosse Impedanz der Erde nachteilig sein. Als Alternative ist deshalb auch eine gegenphasige Signaleinkopplung (Gegentakt - Signalübertragung) auf zwei oder zwei Gruppen von Phasenleiterschirmen 11a, 11c möglich (durchgezogene Darstellung). Die aus dem Stand der Technik an sich bekannten Methoden der Gleichtakt - und Gegentakt - Signalübertragung sind also mit dem erfindungsgemässen Koppelkabel 12 besonders einfach realisierbar.

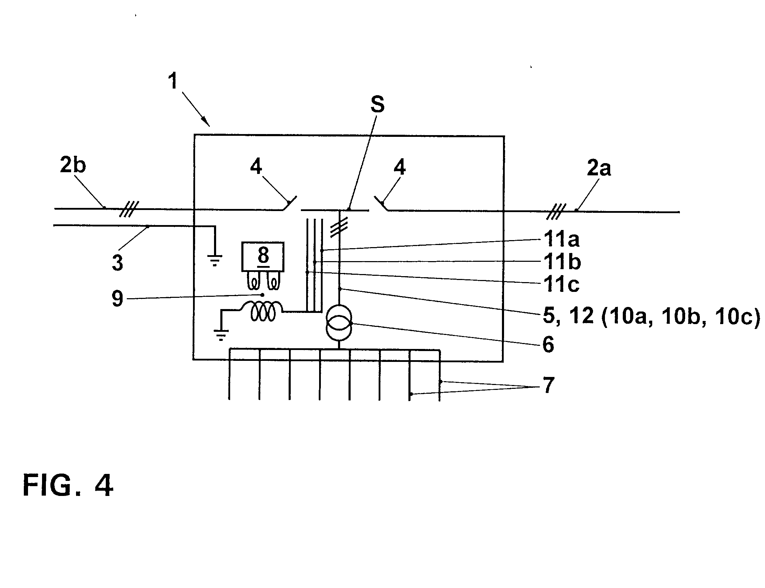

In Fig. 4 ist eine erfindungsgemässe Anordnung des Koppelkabels 12 in einer Zuleitung 5 zwischen der Sammelschiene S und einem Verteiltransformator 6 einer Energieverteilungsanlage 1 gezeigt. Das Koppelkabel 12 kann in die Zuleitung 5 eingefügt sein oder die Zuleitung 5 ersetzen. Beispielhaft sind alle drei Phasenschirme 11a, 11b, 11c für einen Gleichtakt - Betrieb mit dem Signaltransformator 9 zusammengeschlossen.

Es ist auch denkbar, in einer Phase der Zuleitung 5 oder Stromleitung 2a, 2b eine nicht dargestellte T - förmige Verzweigung vorzusehen und mindestens einen Phasenleiter 10; 10a, 10b, 10c des Koppelkabels 12 an die T - förmige Verzweigung einseitig anzuhängen und die Abschirmungen 10; 10a, 10b, 10c wie zuvor beschrieben zu kontaktieren. Auf diese Weise kann ein besonders platzsparender Einbau realisiert werden. Auch ist es problemlos möglich, ein Koppelkabel 12 mit einer einzigen Phase 10a zur Signaleinkopplung in eine mehrphasige Stromleitung 2a, 2b, 5 zu verwenden. Im Normalfall wird allerdings das Koppelkabel 12 die gleiche Anzahl Phasen 10; 10a, 10b, 10c aufweisen wie die Stromleitung 2a, 2b, 5.

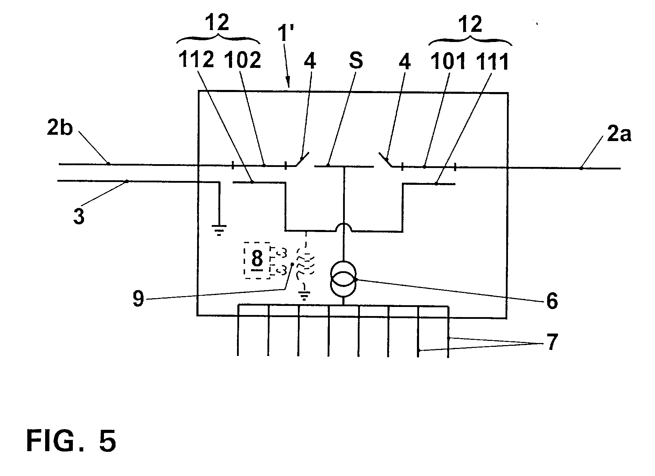

Fig. 5 betrifft eine Ausführungsform mit zwei Koppelkabeln 12 zur nachrichtentechnischen Überbrückung mindestens eines Schalters 4, z. B. eines Lasttrenners 4, einer Energieverteilungsanlage 1 mit Kommunikationsbedarf (8, 9, gestrichelt angedeutet) oder ohne Kommunikationsbedarf. Die Koppelkabel 12 sind mit den Phasenleitern 101, 102 beidseits des mindestens einen Schalters 4 angeordnet und die Abschirmungen 111, 112 der Koppelkabel 12 sind miteinander elektrisch leitend verbunden. Dabei können die Abschimungen 111, 112 eins-zu-eins, über Kreuz, verzweigungsförmig oder zusammenführend miteinander verbunden sein.

Wichtige Vorteile des erfindungsgemässen Koppelkabels 12 betreffen: die vielfältige Signaleinkopplung in eine oder mehrere Phasen oder auf einen Erdleiter der Stromleitung 2a, 2b, 5; die geometrische Flexibilität und einfache Verlegbarkeit des Koppelkabels 12; und die einfache Nachrüstbarkeit bestehender Energieverteilungsanlagen 1, wobei die ursprüngliche Anordnung von Stromkabeln und Erdanschlüssen beibehalten werden kann.

Insgesamt ergibt sich durch die Verwendung eines modifizierten Koppelkabels 12 als Koppelkondensator KK eine sehr kompakte, einfach zu montierende und effiziente Signaleinkopplung in Stromleitungen 2a, 2b, 5. Die Erfindung eignet sich besonders gut für die digitale Signalübertragung über die Phasen von Hochund Mittelspannungsleitungen.

### BEZUGSZEICHENLISTE

- 1, 1': Energieverteilungsanlage, Schaltstation, Transformatorenstation
- 1': Energieverteilungsanlage ohne Kommunikationsbedarf
- 2a, 2b, 5: Stromleitung
- 2a: (Hoch/Mittelspannungs-) Überlandleitung, Freiluftleitung
- 2b: Stromkabel, Hoch/Mittelspannungskabel
- 3: Stromkabel - Abschirmungen
- 4: Schalter
- 5: Zuleitung
- 6: Mittel/Niederspannungs - Transformator
- 7: Verbraucher, Niederspannungsverteilung
- 8: Kommunikationselektronik
- 9: Signaltransformator
- 10; 10a, 10b, 10c; 101, 102: Einkoppelstrecken, Phasenleiter
- 11; 11a, 11b, 11c; 111, 112; 13: Einkoppelabschirmungen, Phasenleiterschirme
- 12: Koppelkabel; dreiphasiges Hoch-, Mittelspannungskabel
- 13: Kabelabschirmung
- 14: Isolation
- D: Durchführung
- KK: Koppelkondensator (Stand der Technik)
- L, L₁, L₂: Länge der Einkoppelstrecke, des Koppelkabels
- S: Stromleitung, Sammelschiene

## Patentansprüche

1. Vorrichtung zur Signalübertragung über Stromleitungen (2a, 2b) eines Mittel- oder Hochspannungsnetzes, umfassend eine Kommunikationselektronik (8) mit mindestens einem Signalkoppler (9) und mindestens einem Koppelkondensator zur Signaleinkopplung in mindestens eine Phase der Stromleitung (2a, 2b, 5), dadurch gekennzeichnet, dass
a) als Koppelkondensator ein Koppelkabel (12) vorgesehen ist, welches einen Phasenleiter (10; 10a, 10b, 10c; 101, 102) und eine Abschirmung (11; 11a, 11b, 11c; 111, 112; 13) aufweist,
b) der Phasenleiter (10; 10a, 10b, 10c; 101, 102) des Koppelkabels (12) mit der Phase der Stromleitung (2a, 2b, 5) in elektrischer Verbindung steht und
c) die Abschirmung (11; 11a, 11b, 11c; 111, 112; 13) des Koppelkabels (12) mit dem Signalkoppler (9) in elektrischer Verbindung steht.

2. Vorrichtung zur Signalübertragung nach Anspruch 1, dadurch gekennzeichnet, dass
a) jede Phase der Stromleitung (2a, 2b, 5) mit je einem Phasenleiter (10; 10a, 10b, 10c; 101, 102) des Koppelkabels (12) elektrisch verbunden ist,
b) die Abschirmung aus einem oder mehreren Phasenleiterschirmen (11; 11a, 11b, 11c; 111, 112) besteht und
c) die Phasenleiterschirme (11; 11a, 11b, 11c; 111, 112) miteinander im Gleichtakt oder zueinander im Gegentakt an den Signalkoppler (9) angeschlossen sind.

3. Vorrichtung zur Signalübertragung nach Anspruch 2, dadurch gekennzeichnet, dass
a) das Koppelkabel (12) eine Länge (L, L₁, L₂) zwischen 2 m und 20 m, bevorzugt zwischen 4 m und 10 m, hat und
b) der Signalkoppler ein Transformator (9) zum Senden und/oder Empfangen ist.

4. Vorrichtung zur Signalübertragung nach Anspruch 3, dadurch gekennzeichnet, dass
a) die Stromleitung eine ungeschirmte Überlandleitung (2a) ist oder
b) die Stromleitung ein Stromkabel (2b) mit geerdeten Phasenabschirmungen ist, welche von den Phasenleiterschirmen (11; 11a, 11b, 11c; 111, 112) des Koppelkabels (12) elektrisch isoliert sind.

5. Vorrichtung zur Signalübertragung nach Anspruch 4, dadurch gekennzeichnet, dass
a) das Koppelkabel (12) ein ein- oder mehrphasiges Mittelspannungskabel (12) oder ein ein- oder mehrphasiges Hochspannungskabel ist und
b) das Koppelkabel (12) im Innern einer Energieverteilungsanlage (1) verlegt ist.

6. Vorrichtung zur Signalübertragung nach Anspruch 5, dadurch gekennzeichnet, dass
a) das Koppelkabel (12) zwischen einer Durchführung oder einem Kabelabgang und einem Schalter (4) einer Energieverteilungsanlage (1) angeordnet ist oder
b) das Koppelkabel (12) in einer Zuleitung (5) zwischen einer Sammelschiene (S) und einem Verteiltransformator (6) einer Energieverteilungsanlage (1) angeordnet ist.

7. Vorrichtung zur Signalübertragung nach einem der Ansprüche 1 - 6, dadurch gekennzeichnet, dass
a) zwei Koppelkabel (12) zur Überbrückung mindestens eines Schalters (4) einer Energieverteilungsanlage (1) mit oder ohne Kommunikationsbedarf vorgesehen sind,
b) die Koppelkabel (12) beidseits des Schalters (4) angeordnet sind und
c) die Abschirmungen (11; 11a, 11b, 11c; 111, 112; 13) der Koppelkabel (12) miteinander elektrisch leitend verbunden sind.
